# FASCICULE DE BREVET EUROPEEN

(11) **EP 1 066 883 B1**
(45) Date de publication et mention de la délivrance du brevet: **08.10.2008**
(21) Numéro de dépôt: 00490026.2
(22) Date de dépôt: 30.06.2000
(51) Int. Cl.: B02C 18/14, B02C 18/18

(54) **Broyeur, notamment destiné à la réduction de végétaux ou autres matériaux**
Zerkleinerungsvorrichtung für z.B. pflanzliches Material
Shredding apparatus for vegetal or other material

(30) Priorité: 01.07.1999 FR 9908736
(43) Date de publication de la demande: 10.01.2001
(73) Titulaire: Société d'Equipements Pour L'Environnement, 59790 Ronchin (FR)
(72) Inventeur: Willerval, Olivier, 59810 Lesquin (FR)
(74) Mandataire: Duthoit, Michel Georges André

(56) Documents cités:
- WO-A-00/13797
- DE-U- 9 113 277
- DE-U- 9 410 330
- FR-A- 943 110
- US-A- 3 724 767
- US-A- 5 189 868
- US-A- 5 413 286

## Description

La présente invention concerne un broyeur, notamment destiné à la réduction de végétaux ou autres matériaux, tels que notamment branches.

Toutefois, bien que plus particulièrement prévu pour de telles applications, le broyeur selon l'invention pourra également être utilisé pour broyer d'autres produits.

De tels broyeurs sont communément utilisés pour l'entretien des parcs et jardins, où l'on est amené à traiter de grandes quantités de végétaux, découpés ou morts. Ceux-ci sont particulièrement encombrants, et pour faciliter leur élimination, et/ou leur transport vers des zones de stockage ou de traitement, il est préférable de diminuer leur volume en les réduisant en morceaux.

Pour cela, on connaît des dispositifs de broyage comprenant une zone d'alimentation et une zone d'éjection, entre lesquelles est ménagée une chambre équipée de moyens de broyage, qui sont constitués par un rotor comportant sur sa périphérie des outils spécifiques selon le type de végétaux ou matériaux à broyer.

In est notamment connu du document US 5,413,286 un broyeur comprenant un rotor sur lequel sont montés les différents outils de traitement de façon à attaquer successivement les matériaux à broyer lors de la rotation dudit rotor.

Afin de broyer efficacement des branches de moyen ou de gros diamètre, par exemple de 5 à 20 cm, il est connu d'utiliser des broyeurs à couteaux qui sont destinés à effectuer des coupes transversales sur lesdites branches.

Pour encore les petites branches, par exemple jusque 5 cm, des broyeurs à fléaux sont préférés, car les fléaux exercent contre le tout-venant, les feuilles, l'herbe ou, lesdites petites branches un travail de défibrage du bois assurant sa réduction.

La difficulté réside dans le fait qu'il est nécessaire d'effectuer un tri des végétaux ou matériaux à broyer si l'on ne veut pas détériorer les moyens de broyage à couteaux, qui se dégradent rapidement en présence de pierres ou cailloux, ou si l'on souhaite une bonne efficacité des moyens de broyage.

Des broyeurs autres que des broyeurs à rotor sont d'ailleurs le plus souvent utilisés pour le traitement des végétaux. Ils ne sont cependant pas entièrement satisfaisants.

Un problème rencontré avec l'ensemble des broyeurs connus réside en effet dans l'apparition de phénomènes de bourrage dans la chambre de broyage.

Le but de la présente invention est de proposer un broyeur pour réduire les végétaux tels que, notamment des branches dénudées ou non, des arbustes ou autres matériaux et de permettre d'augmenter le rendement dudit broyeur; c'est-à-dire capable de broyer tout autant des branches de petit diamètre que des branches de gros diamètre, et ne faisant pas obstacle à la présence de pierres ou cailloux ou de tous autres matériaux durs.

La présenté invention permet d'atteindre ces buts et concerne à cet effet un broyeur selon la revendication 1.

La présente invention concerne également les caractéristiques qui ressortiront au cours de la description qui va suivre, et qui devront être considérés isolément ou selon toutes leurs combinaisons techniques possibles.

Cette description donnée à titre d'exemple non limitatif fera mieux comprendre comment l'invention peut être réalisée en référence aux dessins annexés sur lesquels :
- la figure 1 est une vue schématique en coupe longitudinale d'un broyeur selon l'invention,
- la figure 2 est une vue d'un rotor polyvalent selon la figure 1,
- la figure 3 est une vue du rotor selon la figure 2, lors de l'attaque d'un matériau dur,
- la figure 4 est une vue du rotor selon la figure 2, lors de l'attaque d'une branche de gros diamètre,
- la figure 5 est une vue longitudinale d'un rotor double selon une variante de réalisation,
- la figure 6 est une vue transversale selon la figure 5,

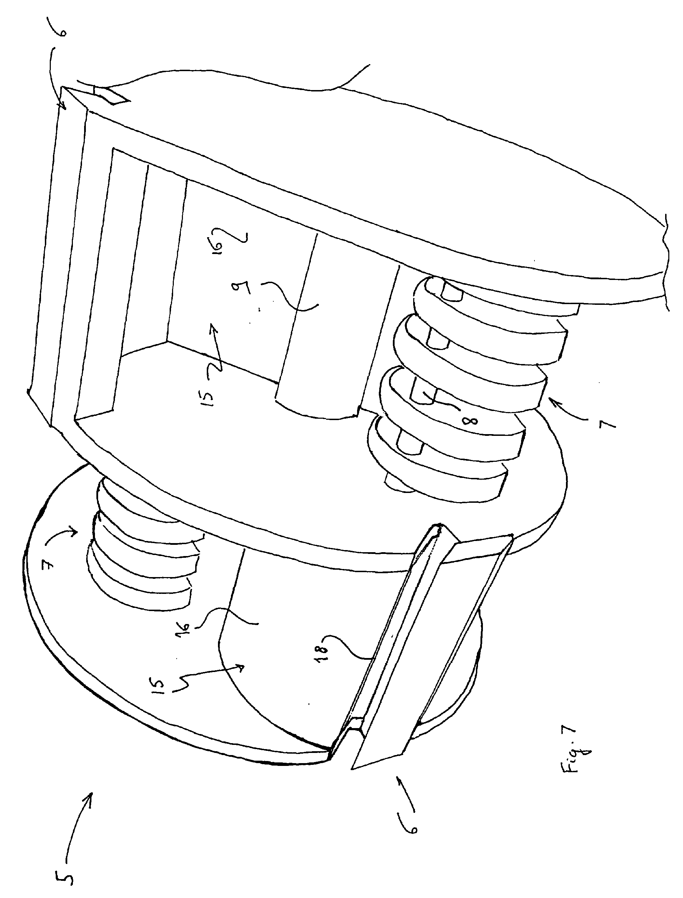

- la figure 7 reprend en perspective le rotor de la figure 5.

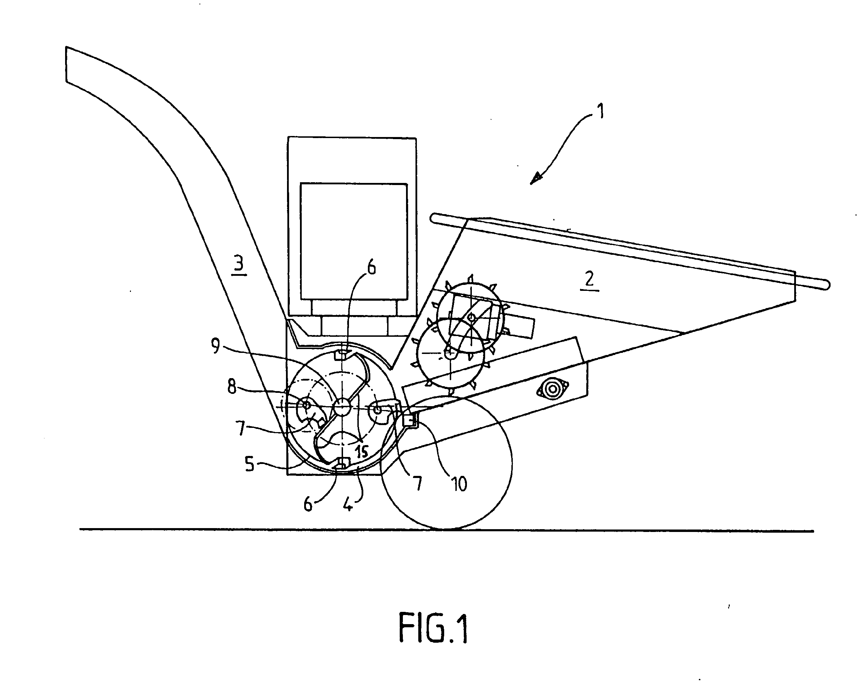

Le broyeur 1, désigné dans son ensemble à la figure 1, comprend une zone d'alimentation 2, et une zone d'éjection 3. La matière traitée circule ainsi dans le broyeur 1 en allant de la zone d'alimentation 2 à la zone d'éjection 3 selon un sens de progression passant par une chambre intermédiaire 4 située entre la zone d'alimentation 2 et la zone d'éjection 3, qui est destinée à être équipée des moyens de broyage.

Ces derniers sont avantageusement constitués par un rotor comportant des outils spécifiques selon le type de végétaux ou matériaux à broyer.

Plus précisément, selon l'invention, ces moyens de broyage sont constitués par un rotor 5 sur lequel sont disposés en alternance, des outils de coupe 6, destinés au broyage d'un type de végétaux, et des outils de défibrage ou d'éclatement 7, destinés au broyage d'autres types de végétaux ou matériaux durs, ainsi que des moyens de ventilation 15, permettant l'évacuation des végétaux ou autres matériaux broyés hors de ladite chambre.

Il est obtenu ainsi un tambour actif polyvalent.

Lesdits moyens de ventilation 15 sont, par exemple, distincts desdits outils de coupe 6 et desdits outils de défibrage ou d'éclatement 7.

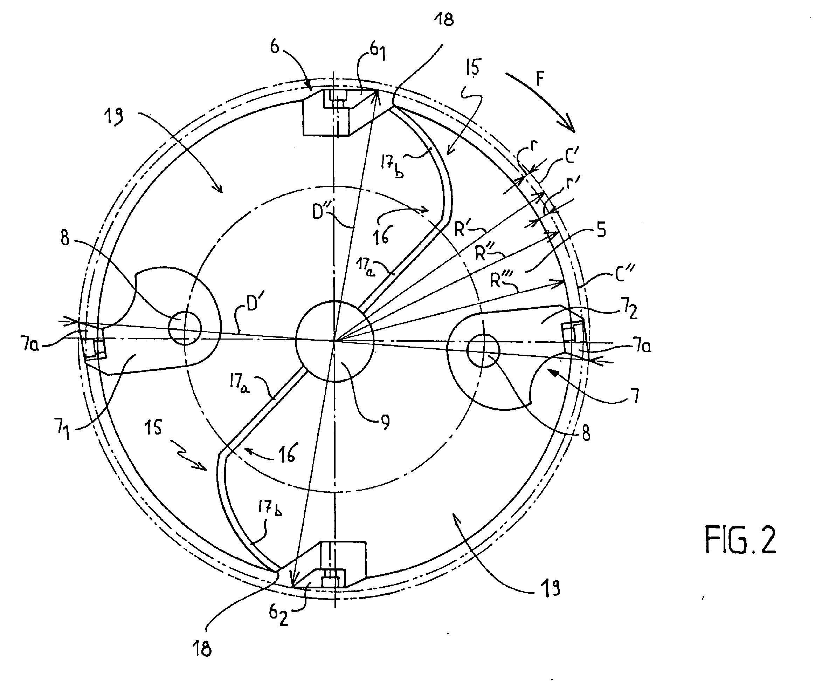

Comme illustré à la figure 2, lesdits moyens de ventilation 15 sont positionnés, notamment, de façon à définir le gabarit des fragments de végétaux ou autres matériaux tranchés par lesdits outils de coupe 6.

Lesdits outils de coupe 6, lesdits outils de défibrage ou d'éclatement 7 et lesdits moyens de ventilation 15 sont positionnés les uns par rapport aux autres, selon le sens de rotation du rotor, par exemple, de façon à autoriser successivement le défibrage ou l'éclatement, la définition du gabrit des fragments tranchés, la coupe et l'évacuation des végétaux ou autres matériaux broyés. On traite ainsi lesdits végétaux ou autres matériaux dès leur entrée dans la chambre 4 de façon à autoriser leur broyage à un niveau suffisamment fin pour être évacués directement, sans avoir à rester au contact du rotor. On favorise de la sorte l'absence de bourrage.

Les outils de coupe 6 et/ou les outils de défibrage ou d'éclatement 7 sont positionnés de façon à présenter une zone d'action sur les végétaux ou autres matériaux sensiblement parallèle à l'axe 9 de rotation du rotor tandis que lesdits moyens de ventilation 15 sont, au moins partiellement, radiaux.

Les outils de coupe 6 sont constitués par des couteaux sur le rotor 5, et agissent de manière tangentielle dans le sens de rotation F dudit rotor 5. Ils interviennent efficacement pour couper des branches de moyen ou de gros diamètre sous la forme, par exemple, de fragments présentant la section de la branche traitée et d'épaisseur donnée.

Par contre, les outils de défibrage ou d'éclatement 7 sont constitués par des fléaux s'articulant librement sur un axe d'articulation fixe 8, et s'étendant parallèlement à l'axe 9 du rotor 5 pour agir de manière tangentielle sous l'effet de la force centrifuge agissant dans le sens de rotation du rotor 5, et intervenant quant à eux pour défibrer le tout-venant, les feuilles, l'herbe ou les petites branches et éclater les matériaux durs tels que des pierres ou cailloux. Grâce à leur articulation libre, ils s'escamotent lorsqu'ils rencontrent des branches de moyen ou gros diamètre, celles-ci étant traitées par les outils de coupe lorsqu'ils rencontrent à leur tour lesdites branches. Lesdits outils de défibrage ou d'éclatement 7 sont éventuellement libres en rotation tout autour de leur axe d'articulation 8.

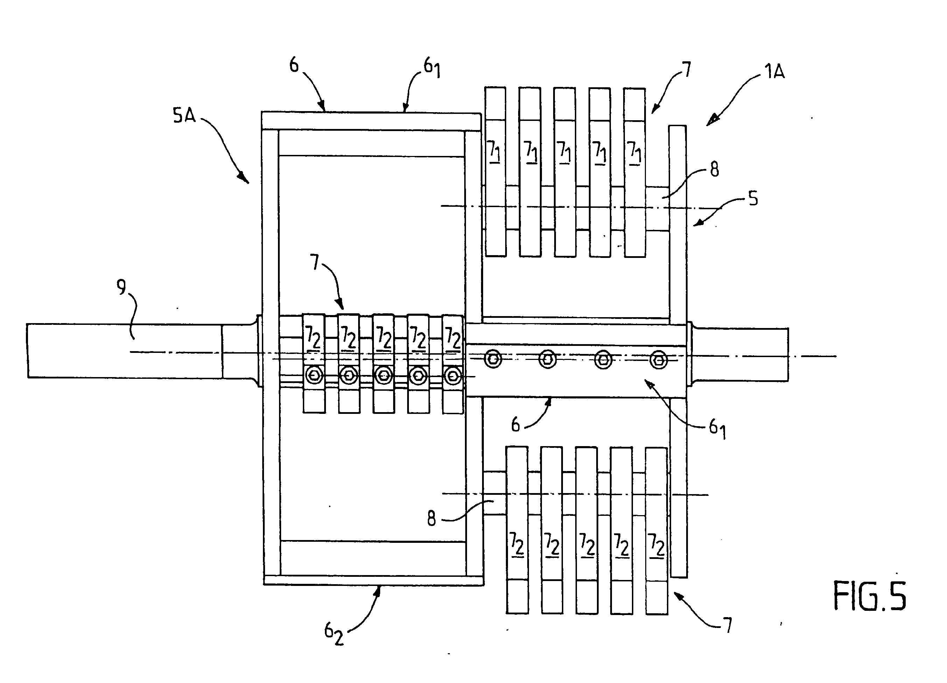

En fait, le rotor 5 comporte à sa périphérie notamment deux séries de couteaux 6₁, 6₂, diamétralement opposés, s'étendant suivant deux lignes axiales correspondant sensiblement à deux génératrices du rotor 5, comme le montre la zone de droite de la figure 5.

Egalement, le rotor 5 comporte à sa périphérie notamment deux séries de fléaux 7₁, 7₂, diamétralement opposés, s'étendant suivant deux lignes axiales, correspondant sensiblement à deux génératrices du rotor 5, mais qui sont avantageusement décalées de 90 ° par rapport aux lignes de coupe des couteaux 6.

En outre, les fléaux 7₁, d'une ligne de défibrage et d'éclatement sont eux-mêmes notamment décalés axialement par rapport à ceux d'une autre ligne 7₂ de défibrage et d'éclatement opposée, de manière à obtenir une meilleure efficacité des fléaux 7 quelle que soit l'introduction des végétaux dans la zone d'alimentation 2.

Selon une autre caractéristique de l'invention, les zones d'attaque 7a des fléaux 7 de deux lignes de défibrage et d'éclatement opposées sont diamétralement espacées selon une distance D' supérieure à celle D" des zones d'attaque 6a des couteaux 6 des deux lignes de coupe, de manière à obtenir, par rotation, deux cylindres virtuels de travail dont l'un C' de défibrage et d'éclatement agit sur le végétal ou le matériau préalablement à l'autre C" de coupe.

C'est précisément ce dépassement radial « r » (R' - R")des fléaux 7 par rapport aux couteaux 6 qui permettra de préserver ces derniers lors de la présence d'un caillou ou d'une pierre dans le tout-venant au moment de l'introduction dans la zone d'alimentation.

Comme le montrent particulièrement bien les figures, les fléaux 7 constituant les outils de défibrage et d'éclatement sont constitués par des masselottes excentrées par rapport à leur axe d'articulation 8 solidaires du rotor 5.

En fait, les zones de coupe 7a sont rapportée sur ces masselottes par des moyens mécaniques permettant de les rendre amovibles afin de permettre leur interchangeabilité en cas d'usure.

Il en est de même pour les couteaux 6 qui sont reliés au rotor 5 par l'intermédiaire de moyens mécaniques permettant leur interchangeabilité également.

Lesdits moyens de ventilation sont constitués, par exemple, d'au moins une pâle 16. Comme illustré à la figure 2, le rotor comprend, notamment, deuxdites pâles 16, symétriques par rapport à l'axe 9 de rotation du rotor.

Lesdites pâles 16 sont constituées, par exemple, d'une partie proximale 17ₐ radiale, s'étendant dudit axe 9 de rotation du rotor jusqu'à environ la moitié du rayon dudit rotor, et d'une partie distale 17_{b}, s'étendant dans le prolongement de ladite partie proximale 17ₐ vers la périphérie du rotor, en s'incurvant selon le sens opposé au sens de rotation du rotor.

Ladite partie proximale 17ₐ de chaque pâle est orientée, notamment selon la médiatrice de deux outils de coupe 6 et outils de défibrage et d'éclatement 7 successifs, la partie distale 17_{b} présentant un rebord distal 18 juste en amont desdits outils de coupe 6, selon le sens de rotation du rotor. Les pâles 16 définissent ainsi, en quelque sorte, des logements 19 dans lesquels les marteaux 7 sont mobiles.

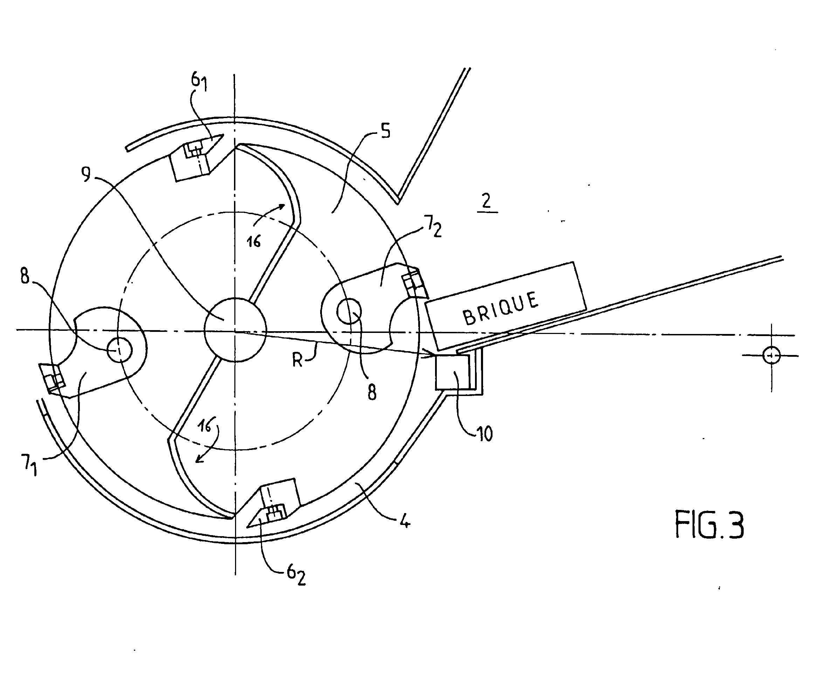

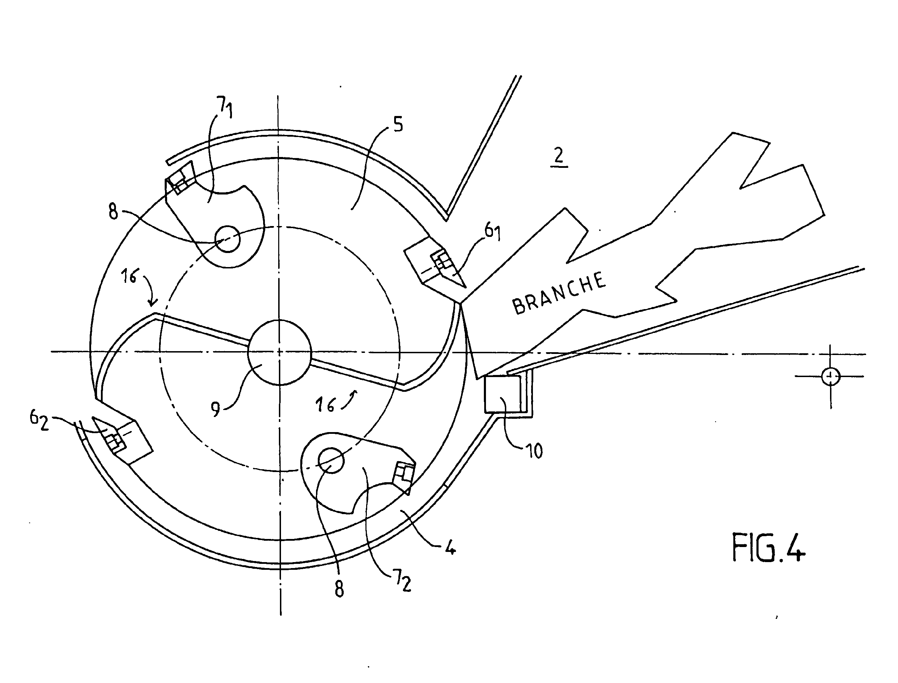

Selon une autre caractéristique de l'invention, particulièrement bien visible sur les figures 3 et 4, dans une zone limitrophe de la zone d'alimentation 2 et de la chambre de broyage 4, est disposée fixement une barre de coupe 10 s'étendant axialement au rotor 5 et se situant à une distance radiale R de celui-ci, sensiblement correspondant, et au plus égale, au rayon R' de la surface de base du cylindre virtuel de travail C', de défibrage et d'éclatement.

La barre 10 constitue en fait une pièce d'usure de section carrée pouvant être tournée de 90° quand une de ses faces est usée, ce qui multiplie par quatre sa durée de vie.

A noter également que la différence « r' » entre le rayon R"' du voile du tambour du rotor 5, correspondant au bord distal 18 des pâles 16, sur lequel l'extrémité des branches vont buter et le rayon R" de la surface de base du cylindre virtuel de coupe C" est égale à l'épaisseur de coupe souhaitée (R" - R"' = r' = épaisseur de coupe).

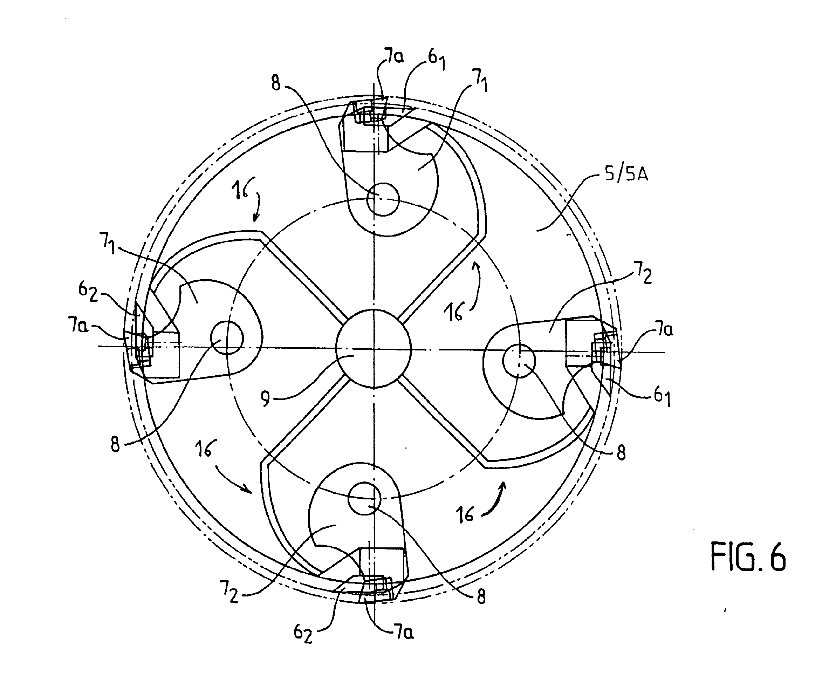

Selon une variante de réalisation, représentée sur les figures 5 et 6, le broyeur 1A se distingue du précédent en ce qu'il comporte un second rotor 5A constituant un second tambour actif, identique au premier, qui est disposé sur le même axe afin de constituer un rotor double.

Comme le montre particulièrement bien la figure 5, le second rotor 5A est angulairement décalé de 90 ° par rapport au premier 5, de manière à ce que les couteaux 6 d'une ligne de coupe du premier rotor soient notamment décalés par rapport à ceux d'une autre ligne de coupe du second rotor pour une plus grande efficacité de coupe, quelle que soit l'introduction de la branche.

La figure 5 permet de visualiser non seulement cette dernière caractéristique mais également le fait que les fléaux 7 sont décalés également axialement les uns par rapport aux autres d'une ligne de défibrage et d'éclatement à une autre.

D'une manière générale, l'alternance des lignes de couteaux 6, des lignes de fléaux 7 et des pâles 16 sur un même rotor 5 ou 5A et le décalage angulaire d'un rotor 5 par rapport à un autre 5A identique permet d'obtenir un équilibrage pour une machine travaillant sans saccade et sans vibration.

L'ensemble ainsi constitué, qu'il soit à rotor simple ou à rotor double, crée un flux d'air éjectant les végétaux broyés en direction de la zone d'éjection 2. Les particules de végétaux ou de matériaux sont ainsi éjectés après broyage et permettent la libération du broyeur, sans équipement de filtrage et/ou d'extraction supplémentaire.

Bien naturellement, les dispositions qui viennent d'être décrites peuvent être adaptées, sans sortir de la présente invention notamment quant au nombre de couteaux et/ou de fléaux et/ou rotors.

## Revendications

1. Broyeur, notamment destiné à la réduction de végétaux ou autres matériaux, comprenant une zone d'alimentation (2) et une zone d'éjection (3), entre lesquelles est ménagée une chambre (4) équipée de moyens de broyage, qui sont constitués par un rotor (5) comportant des outils spécifiques selon le type de végétaux ou matériaux à broyer disposés en alternance, à savoir : des outils de coupe (6) destinés au broyage d'un type de végétaux, et des outils de défibrage ou d'éclatement (7) destinés au broyage d'autres types de végétaux ou matériaux durs, **caractérisé en ce que** sur ledit même rotor (5) sont également disposés des moyens de ventilation (15), positionnés par rapport auxdits outils de coupe (6) de façon à définir le gabarit des fragments de végétaux ou autres matériaux tranchés par lesdits outils de coupe (6), permettant l'évacuation des végétaux ou autres matériaux broyés hors de ladite chambre (4), et **en ce que** dans lequel broyeur lesdits outils de coupe (6), lesdits outils de défibrage ou d'éclatement (7) et lesdits moyens de ventilation (15) sont positionnés les uns par rapport aux autres, selon le sens de rotation du rotor, de façon à autoriser successivement le défibrage ou l'éclatement, la définition du gabarit des fragments à trancher, la coupe et l'évacuation des végétaux ou autres matériaux broyés, de manière à constituer un tambour actif polyvalent.

2. Broyeur, selon la revendication 1, dans lequel les outils de coupe (6) sont constitués par des couteaux disposés fixement sur le rotor (5) et agissant de manière tangentielle dans le sens de rotation du rotor (5).

3. Broyeur, selon la revendication 1, dans lequel les outils de défibrage ou d'éclatement (7) sont constitués par des fléaux, s'articulant librement sur un axe d'articulation fixe (8), s'étendant parallèlement à l'axe (9) du rotor (5), et agissant de manière tangentielle sous l'effet de la force centrifuge dans le sens de rotation du rotor (5).

4. Broyeur, selon la revendication 2, dans lequel le rotor (5) comporte à sa périphérie deux séries de couteaux (6₁, 6₂), diamétralement opposés, s'étendant suivant deux lignes axiales correspondant sensiblement à deux génératrices du rotor (5).

5. Broyeur, selon les revendications 3 et 4, dans lequel le rotor (5) comporte à sa périphérie, deux séries de fléaux (7₁, 7₂) diamétralement opposés, s'étendant suivant deux lignes axiales, correspondant sensiblement à deux génératrices du rotor (5), qui sont décalées de 90° par rapport aux lignes de coupe, les fléaux (7₁) d'une ligne de défibrage et d'éclatement étant eux-mêmes décalés axialement par rapport à ceux (7₂) de l'autre ligne de défibrage et d'éclatement opposée.

6. Broyeur, selon la revendication 5, dans lequel les zones d'attaque (7a) des fléaux (7) de deux lignes de défibrage et d'éclatement opposées sont diamétralement espacées selon une distance D' supérieure à celle D" des zones d'attaque (6a) des couteaux (6) des deux lignes de coupe, de manière à obtenir par rotation deux cylindres virtuels de .travail C' et C", dont l'un C' de défibrage et d'éclatement agit sur le végétal ou le matériau préalablement à l'autre C" de coupe.

7. Broyeur, selon l'une des revendications précédentes, dans lequel une zone limitrophe de la zone d'alimentation (2) et de la chambre de broyage (4), est disposée fixement une barre de coupe (10) s'étendant axialement au rotor (5), et se situant à une distance radiale R de celui-ci, sensiblement correspondante, et au plus égale, au rayon R' de la surface de base du cylindre virtuel de défibrage et d'éclatement C'.

8. Broyeur, selon l'une des revendications précédentes, comportant un second rotor (5A) constituant un second tambour actif, similaire au premier, disposé axialement sur le même axe, pour constituer un rotor double (5, 5A), le second rotor (5A) étant angulairement décalé de 90° par rapport au premier (5).

## Claims

1. A shredder, more particularly intended for reducing plants or other materials, comprising a feeding section (2) and an ejection section (3), between which is arranged a chamber (4) provided with shredding means which consist of a rotor (5) including specific tools depending on the type of plants or materials to be shredded, in alternating positions, i.e.: cutting tools (6) intended for shredding a type of plants, and defibring and bursting tools (7) intended for shredding other types of hard plants or materials, **characterized in that**, on the same rotor (5) are also positioned ventilation means (15), positioned with respect to said cutting tools (6), so as to define the gauge of the chunks of plants or other materials cut by said cutting tools (6), allowing the discharge of the shredded plants and other materials out of said chamber (4), and **in that**, in said shredder, said cutting tools (6), said defibring and bursting tools (7) and said ventilation means (15) are positioned with respect to each other, depending on the direction of the rotor rotation, so as to successively allow the defibring or the bursting operation, the definition of the gauge of the chunks to be cut, the cutting and the discharge of the shredded plants or other materials, so as to serve as a multipurpose active drum.

2. A shredder according to claim 1, wherein the cutting tools (6) consist of knives fixedly connected to the rotor (5), and acting tangentially, in the direction of the rotor (5) rotation.

3. A shredder according to claim 1, wherein the defibring and bursting tools (7) consist of flails freely articulated about a fixed articulation axis (8) extending parallel to the axis (9) of the rotor (5), and acting tangentially under the effect of the centrifuge force in the direction of the rotor (5) rotation.

4. A shredder according to claim 2, wherein the rotor (5) includes, on the periphery thereof, two series of diametrically opposite knives (6₁, 67₂), extending along two axial lines substantially corresponding to two generatrices of the rotor (5).

5. A shredder according to claims 3 and 4, wherein the rotor (5) includes, on the periphery thereof, two series of diametrically opposite flails (7₁, 7₂), extending along two axial lines substantially corresponding to two generatrices of the rotor (5), which are shifted by 90° with respect to the cutting lines, the flails (7₁) themselves of a defibring and bursting line being axially shifted with respect to those (7₂) of the other opposite defibring and bursting line.

6. A shredder according to claim 5, wherein the driving sections (7a) of the flails (7) of two opposite defibring and bursting lines are diametrically spaced by a distance D' greater than the distance D" spacing the driving sections (6a) of the knives (6) of two cutting lines, so as to obtain, by rotation, two virtual working cylinders C' and C", among which one defibring and bursting cylinder C' acts on the plants or the material before the other cutting cylinder C".

7. A shredder according to any one of the preceding claims, wherein a cutter bar (10), extending axially with respect to the rotor (5) and being located at a radial distance R thereof, substantially corresponding and at most equal to the radius R' of the base surface of the virtual defibring and bursting cylinder C', is fixedly positioned in a section adjacent to the feeding section (2) and the shredding chamber (4).

8. A shredder according to any one of the preceding claims, including a second rotor (5A) serving as a second active drum, similar to the first one, axially positioned on the same axis, for constituting a double drum (5, 5A), the second rotor (5A) being angularly shifted by 90° with respect to the first one.

## Patentansprüche

1. Schredder, insbesondere vorgesehen zum Zerkleinern von Pflanzen oder anderen Stoffen, umfassend einen Beschickungsbereich (2) und einen Ausstoßbereich (3), zwischen denen eine Kammer (4) vorgesehen ist, die mit Mitteln zum Zerkleinern ausgestattet ist, die durch einen Rotor (5) gebildet sind, umfassend je nach der Beschaffenheit der zu zerkleinernden Pflanzen oder Stoffe spezifische Werkzeuge, die alternierend angeordnet sind, und zwar Werkzeuge zum Schneiden (6), vorgesehen zum Zerkleinern einer Pflanzenart, und Werkzeuge zur Entfaserung oder Zerpaltung (7), vorgesehen zum Zerkleinern anderer Pflanzenarten oder harter Stoffe, **dadurch gekennzeichnet, dass** nämlich an dem besagten selben Rotor (5) ebenfalls Gebläsemittel (15) angeordnet sind, die hinsichtlich der besagten Werkzeuge zum Schneiden (6) derart positioniert sind, um die Größe der Teilchen der Pflanzen oder der anderen Stoffe zu bestimmen, die durch die besagten Werkzeuge zum Schneiden (6) geschnitten sind, erlaubend die Abfuhr der zerkleinerten Pflanzen oder der anderen Stoffe außerhalb der besagten Kammer (4), und dass in dem besagten Schredder die besagten Werkzeuge zum Schneiden (6), die besagten Werkzeuge zur Entfaserung oder Zerspaltung (7) und die besagten Gebläsemittel (15) hinsichtlich einander nach der Drehrichtung des Rotors positioniert sind, derart, um aufeinander folgend die Entfaserung oder die Zerspaltung, die Bestimmung der Größe der zu schneidenden Teilchen, das Schneiden und die Abfuhr der Pflanzen oder der anderen zerkleinerten Stoffe zu erlauben, derart, um eine aktive Mehrzwecktrommel zu bilden.

2. Schredder nach Anspruch 1, bei dem die Werkzeuge zum Schneiden (6) durch Messer gebildet sind, die unbeweglich am Rotor (5) angeordnet sind und tangential zu der Drehrichtung des Rotors (5) wirken.

3. Schredder nach Anspruch 1, bei dem die Werkzeuge zur Entfaserung oder Zerspaltung (7) durch Flegel gebildet sind, die frei mit einer unbeweglichen Gelenkwelle (8), die sich parallel zu der Welle (9) des Rotors (5) erstreckt, gelenkig verbunden sind und unter der Wirkung der Fliehkraft tangential zu der Drehrichtung des Rotors (5) wirken.

4. Schredder nach Anspruch 2, bei dem der Rotor (5) auf seinem Umkreis zwei Reihen von diametral entgegengesetzten Messern (6₁, 6₂) umfasst, die sich folgend zwei Achslinien erstrecken, die im Wesentlichen beiden Zeugenden des Rotors (5) entsprechen.

5. Schredder nach Anspruch 3 und 4, bei dem der Rotor (5) auf seinem Umkreis zwei Reihen von diametral entgegengesetzten Flegeln (7₁, 7₂) umfasst, die sich folgend zwei Achslinien erstrecken, die im Wesentlichen zwei Zeugenden des Rotors (5) entsprechen, die um 90° hinsichtlich der Schneidlinien versetzt sind, wobei die Flegel (7₁) der einen Entfaserungs- und Zerspaltungsstrecke selbst hinsichtlich jener (7₂) der anderen entgegengesetzten Entfaserungs- und Aufspaltungsstrecke axial versetzt seien.

6. Schredder nach Anspruch 5, bei dem die vorderen Bereiche (7a) der Flegel (7) der beiden entgegengesetzten Entfaserungs- und Aufspaltungsstrecken diametral um eine Entfernung D' beabstandet sind, die größer ist als jene D" der Angriffsbereiche (6a) der Messer (6) der beiden Schneidlinien, derart, um durch Drehung zwei virtuelle Arbeitszylinder C' und C" zu erhalten, von denen der eine Arbeitszylinder C' zur Entfaserung und Zerspaltung dem anderen Arbeitszylinder C" zum Schneiden vorgreifend auf die Pflanze oder den Stoff wirkt.

7. Schredder nach einem der vorgehenden Ansprüche, bei dem in einem dem Beschickungsbereich (2) und der Zerkleinerungskammer (4) angrenzender Bereich unbeweglich ein Schneidbalken (10) angeordnet ist, der sich axial zu dem Rotor (5) erstreckt und sich ab diesem selben in einer radialen Entfernung R befindet, die im Wesentlichen dem Radius R' der Grundfläche des virtuellen Entfaserungs- und Zerspaltungszylinders C' entspricht und ihm höchstens gleich ist.

8. Schredder nach einem der vorgehenden Ansprüche, umfassend einen zweiten Rotor (5A), der eine zweite, der Ersten ähnliche aktive Trommel bildet, die axial auf derselben Achse angeordnet ist, um einen doppelten Rotor (5, 5A) zu bilden, wobei der zweite Rotor (5A) winklig um 90° hinsichtlich des Ersten (5) versetzt sei.
